# EUROPÄISCHE PATENTSCHRIFT

(11) **EP 1 670 627 B1**
(45) Veröffentlichungstag und Bekanntmachung des Hinweises auf die Patenterteilung: **23.06.2010**
(21) Anmeldenummer: 04741391.9
(22) Anmeldetag: 10.08.2004
(51) Int. Cl.: B29C 44/58, B29C 33/56, B29C 33/42

(54) **FORMWERKZEUG ZUR HERSTELLUNG VON FORMSCHAUMKÖRPERN**
FORMING TOOL FOR PRODUCING SHAPED FOAM BODIES
OUTIL DE FORMAGE POUR PRODUIRE DES CORPS MOULES EN MOUSSE

(30) Priorität: 14.08.2003 DE 10337559
(43) Veröffentlichungstag der Anmeldung: 21.06.2006
(73) Patentinhaber: International Automotive Components Group GmbH, 47804 Krefeld (DE)
(72) Erfinder: FRESER-WOLZENBURG, Thomas, 30827 Garbsen (DE)
(74) Vertreter: Liesegang, Eva
(86) Internationale Anmeldenummer: PCT/EP2004/008914
(87) Internationale Veröffentlichungsnummer: WO 2005/016620

(56) Entgegenhaltungen:
- US-A- 5 112 025
- US-A- 6 053 214
- US-A1- 2003 075 835
- US-B1- 6 203 651
- DATABASE WPI Section Ch, Week 200045 Derwent Publications Ltd., London, GB; Class A25, AN 1993-163899 XP002315976 & JP 03 084840 B2 (INOAKKU COOPERATION KK) 4. September 2000 (2000-09-04)
- DATABASE WPI Section Ch, Week 199717 Derwent Publications Ltd., London, GB; Class A32, AN 1997-187209 XP002315977 & JP 09 047525 A (BRIDGESTONE SPORTS KK) 18. Februar 1997 (1997-02-18)

## Beschreibung

### Technisches Gebiet

Die vorliegende Erfindung betrifft ein Formwerkzeug zur Herstellung von Polyurethan-Formschaumkörpern durch Einfüllen einer expandierbaren Reaktivmischung in eine Form.

Formschaumkörper neigen dazu, an den Oberflächen der Formwerkzeuge, in denen sie hergestellt werden, festzuhalten, wodurch die Entnahme oder Formschaumkörper stark erschwert, zum Teil sogar unmöglich gemacht wird. Daneben führen die Wandhaftung und die dadurch induzierten Fließscherkräfte während des Aufschäumens und des Füllens der Kavität zu Störungen der Schaumstruktur in Obenflächennähe des Formschaumkörpers. Zur Lösung dieses Problems sind verschiedene Möglichkeiten bekannt.

### Stand der Technik

Die am weitesten verbreitete Methode zur Verminderung der Wandhaftung ist die Verwendung eines zusätzlichen Trennmittels. In der DE-PS 1 131 873 wird ein solches Verfahren behandelt. Die Trennmittel enthalten im Überschuss Stoffe, die mit den freien Isocyanatgruppen während des Schäumvorganges reagieren. Durch das Auftragen des Trennmittels auf die Innenflächen des Werkzeugs vor jedem Schäumvorgang wird das Anhaften des Schaumteils an den Formwänden vermieden. Nachteilig ist dabei die Bildung von Overspray, das die Anlagen Verschmutzt und gesundheits- und umweltschädlich ist. Die in den Trennmitteln enthaltenen Lösungsmittel erfordern Ablüftzeiten. Ebenso wird Zeit dafür benötigt, um das Trennmittel auf die Werkzeugform aufzubringen. Weiterhin verbleibt immer ein Teil des Trennmittels auf dem Formschaumteil, was häufig unerwünscht ist, weil der Verbau der so produzierten Teile erschwert wird. Daneben haben chemische Reaktionen des Trennmittels mit der Reaktivmischung während und auch nach dem Schäumvorgang unerwünschte Auswirkungen auf die Eigenschaften des Bauteils, speziell auf die Offenporigkeit der Oberfläche. Die nach gewisser Zeit notwendigen Reinigungszyklen der Kavitäten aufgrund von anhaftenden Rückständen führen zu weiteren Einschränkungen in der Produktivität.

Aus der DE-OS 2 055 772 sind deshalb Formwerkzeuge bekannt geworden, deren formgebende Oberflächen mit einer relativ dicken Basisschicht aus Kupfer oder Nickel versehen sind, auf die eine sehr dünne Chromschicht aufgebracht ist. Durch die Antihafteigenschaften des Chroms kann die Verwendung eines Trennmittels vermieden werden. Bei dieser Ausführungsform ist jedoch die Verminderung des Potentials der Chromschicht beim Schäumen problematisch, so dass das Potential nach jedem Schaumvorgang neu aufgebaut werden muss. Aufgrund der Empfindlichkeit der Chromschicht kann insbesondere bei hohen Stückzahlen auf Trennmittel nicht ganz verzichtet werden.

In der DE 38 37 351 C1 ist eine weitere Möglichkeit zur Verbesserung des Trennverhaltens dargestellt, bei der innere Trennmittel in die Komponenten zur Schaumbildung beigegeben werden. Dort wird bei der Herstellung von Polyurethan-Formschaumkörpern der Polyol-Komponente flüssiges Polybutadien beigegeben. Hierdurch findet jedoch nicht nur eine Beeinflussung an den Schaumoberflächen in Bezug auf die Verminderung der Schaumhaftung statt, sondern auch der Schäumvorgang, die chemischen Gegebenheiten und die späteren physikalischen Eigenschaften bei den Formkörpern werden beeinflusst. Auch zeigt sich, dass die Trennwirkung nicht hinreichend ist, um gänzlich auf äußere Trennmittel zu verzichten.

Schließlich ist aus der DE 197 13 566 C2 bekannt, ein ionisiertes Gasgemisch positiv aufgeladener Luft vor jedem Schäumvorgang mit hohem Druck in die Schäumform einzublasen, um das Potential der Antihaftschicht und damit den Abstoßeffekt vor jedem Schäumvorgang wieder aufzubauen. Vorteilhaft bei diesem Verfahren ist, dass die Trennwirkung ohne Rückstände auf dem Formteil und ohne Beeinflussung der chemischen Reaktion erfolgt. Auch werden nachteilige Emissionen vermieden. Dieses Verfahren ist jedoch ausschließlich für Formschaurnteile mit geschlossenen Schaumoberflächen geeignet, auch wirken bei diesem Verfahren starke Fließscherkräfte während des Schäumvorganges, was zu Artefakten durch begrenzte Schaumkollapse im Bereich direkt unter der Schaumoberfläche führen kann. Auch ist der Handlingschritt des Einblasens der ionisierten Luft zeitaufwendig und wirkt sich auf die Produktivität aus.

Aus der US-A-5112025 ist ein Formwerkzeug zur Herstellung von Disketten bekannt, bei dem zumindest ein Teil der inneren Formfläche mit einem Film beschichtet ist, der aus Diamond-Like Carbon und PTFE besteht. Damit soll die Verschleißfestigkeit erhöht und der Reibungswiderstand vermindert werden.

JP-A-5096558 offenbart ein Formwerkzeug zur Herstellung von Polyurethan-Formschaumkörpern aus einer expandierbaren Reaktivmischung in einem Werkzeug, wobei die fomgebenden Innenflächen des Werkzeugs mit einer Antihaftbehandlung ausgestattet sind.

### Darstellung der Erfindung

Der Erfindung liegt die Aufgabe zu Grunde, ein Formwerkzeug zu schaffen, mit dem die Herstellung eines Formschaumkörpers auf einfache Weise und kostengünstig möglich ist. Die Qualität der Formschaumkörper bezüglich der Schaumoffenheit und damit der akustischen Wirksamkeit soll erhöht werden. Auch sollen die Fließscherkräfte minimiert werden.

Die Lösung der gestellten Aufgabe erfolgt mit den Merkmalen des Anspruchs 1. Bei einem Formwerkzeug der eingangs genannten Art werden die formgebenden Innenflächen des Werkzeugs mit einer Mikrostrukturierung nach dem Lotusblatt-Effekt und gegebenenfalls zusätzlich einer dauerhaften Antihaftbeschichtung z.B. aus einem Fluorkunststoff oder einem Diamond-Like-Coating ausgestattet. Es zeigt sich, dass mit dem erfindungsgemäßen Formwerkzeug auf einfache Weise eine dauerhafte Trennwirkung erzielt werden kann. Weiter wurde eine Hautbildung nahezu gänzlich vermieden, was für den Einsatz der Formschaumkörper als akustisch wirksame Komponenten zum Beispiel in der Automobil Industrie besonders wichtig ist, da durch die offene Oberfläche die Fähigkeit zur Schallabsorption erhöht wird. Auch zeigt sich, dass die Fließscherkräfte in den Oberflächenbereichen des Formschaumkörpers verringert werden konnten. Durch die Verminderung der Fließscherkräfte wird die Blasenstruktur deutlich gleichmäßiger, da der Schaum während des Schäumvorgangs mechanisch nicht zu stark belastet wird. Dieses führt zu einer deutlich besseren Qualität der Formschaumkörper. Besonders vorteilhaft wirkt sich dies bei Formschaumteilen aus, bei denen die Höhe klein gegenüber Länge und/oder Breite ist, da bei diesen Bauteilen der Volumenanteil, der durch Fließscherkräfte beeinflusst wird, besonders groß ist. Durch den verringerten Fliesswiderstand wird ein verringerter Forminnendruck benötigt, um die Kavität während des Schäumvorganges zu füllen. Dieses führt letztlich zu leichteren Werkzeugen und Werkzeugträgem. Der Materialverbrauch wird durch einen verringerten Austrieb im Bereich der Entlüftung gesenkt. Schließlich kann das Raumgewicht des fertigen Formschaumteils gesenkt werden, weil das eingesetzte Material mit einem niedrigeren Innendruck verarbeitet werden kann.

Die Ausgestaltung und Herstellung einer Fläche mit einer Mikrostrukturierung nach dem Lotusblatt-Effekt ist an sich bekannt. Sie wird in diesem Fall auf die formgebenden Innenflächen des Werkzeugs angewendet. Als Antihaftschicht kommen Fluorkunststoffe wie Polytetrafluorethylen (PTFE) oder eine Mischung aus Tetrafluorethylen und Fluorvinylether (PFA) oder auch ein Tetratluorethylen-Hexafluorpropylen-Compound (FEP) in Frage. Auch Fluorkunststoffe aus Polyethylen-Chlortrifluorethylen (ECTFE) oder aus Polyvinylidenfluorid (PVD F) sind hierfür geeignet. Ebenso geeignet sind zum Beispiel entsprechend dotierte Diamond-like-Coating-Schichten.

Es wurden sowohl mit einer Mikrostrukturierung der Innenflächen nach dem Lotusblatt-Effekt als auch mit einer zusätzlichen, dauerhaften Antihaftbeschichtung aus einem Fluorkunststoff oder einem Diamond-Like Coating gute Ergebnisse erzielt.

Die Mikrostrukturierung nach dem Lotusblatt-Effekt kann direkt auf die Innenflächen des Werkzeugs aufgetragen werden. Möglich ist aber auch hierfür, eine Beschichtung der Innenflächen vorzusehen, in die dann die Mikrostrukturierung eingebracht wird.

Die Ausbildung des Formwerkzeugs führt zu einer hohen Standzeit des Werkzeugs, wodurch die Herstellungskosten für die Formschaumkörper verringert werden. Insbesondere die sehr dünnen Antihaftschichten haben Einfluss auf die Abbildung sehr feiner Strukturen im Formschaumteil, so dass die Geometrie gegenüber einer unbeschichteten formgebenden Oberfläche nicht verändert werden muss.

Zusammenfassend ergibt sich durch die Erfindung eine Vermeidung von Produktionsschwankungen sowie von Ausschuss. Gleichzeitig wird die Taktzeit bei der Herstellung verringert und damit eine Erhöhung der Produktion erreicht. Auch wird eine Verringerung des Forminnendrucks und des Raumvolumens erzielt sowie eine Erhöhung der Absorptionsfläche. Schließlich werden Fließscherartefakte vermieden.

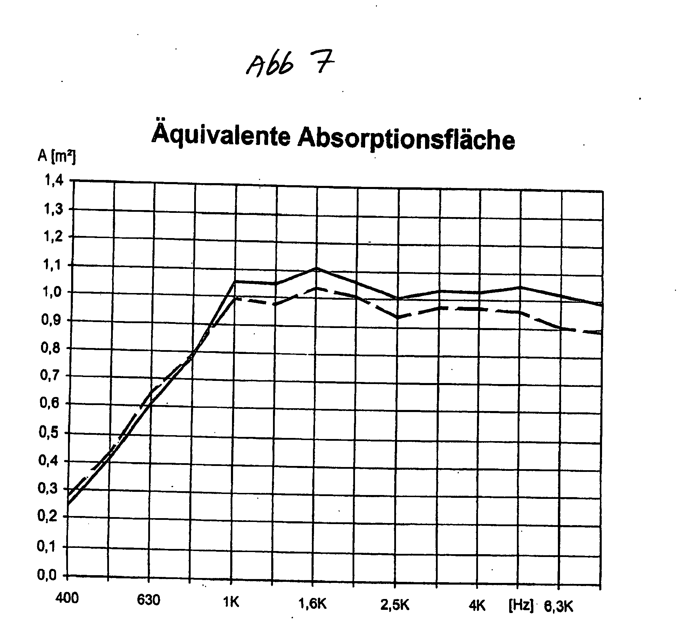

In der beiliegenden Abbildung 7 sind vergleichende Messungen zur Schallabsorption von Formschaumkörpern, hergestellt nach einem üblichen Verfahren mit einem Trennmittel und mit einem Formwerkzeug mit einer Antihaflbeschichtung, dargestellt. Die Kurven zeigen die äquivalente Absorptionsfläche A in m² als Funktion der Frequenz in Hz. Die durchgezogene Kurve zeigt die an einem Formschaumkörper gemessenen Werte, das mit einem Werkzeug mit Antihaftbeschichtung hergestellt wurde. Die gestrichelte Kurve dagegen zeigt die Werte gemessen an einem Formschaumkörper, der in einem Werkzeug unter Verwendung von Trennmitteln hergestellt wurde. Der mit dem neuen Formwerkzeug hergestellte Formschaumkörper zeigte eine deutlich verbesserte Schallabsorption.

In den beiliegenden Abbildungen werden die Auswirkungen der Erfindung auf ein Formschaumteil beschrieben:

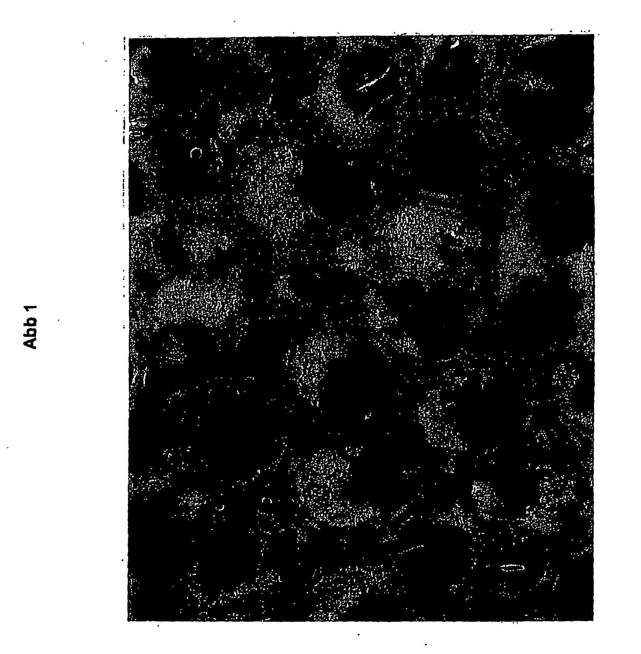

Die Abbildung 1 zeigt eine stark vergrößerte Oberflächenaufsicht eines Formschaumteils mit Ansätzen zur Hautbildung, die durch den Einsatz von Trennmitteln hervorgerufen wurden.

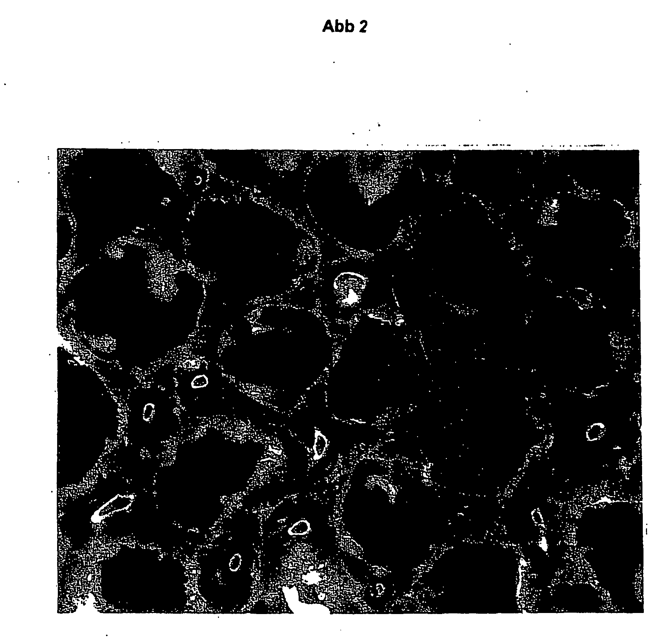

Abbildung 2 zeigt stark vergrößert die Oberflächenaufsicht eines Formschaumteils mit offener Schaumoberfläche aus einer erfindungsgemäß ausgestatteten Kavität ohne Hautbildung.

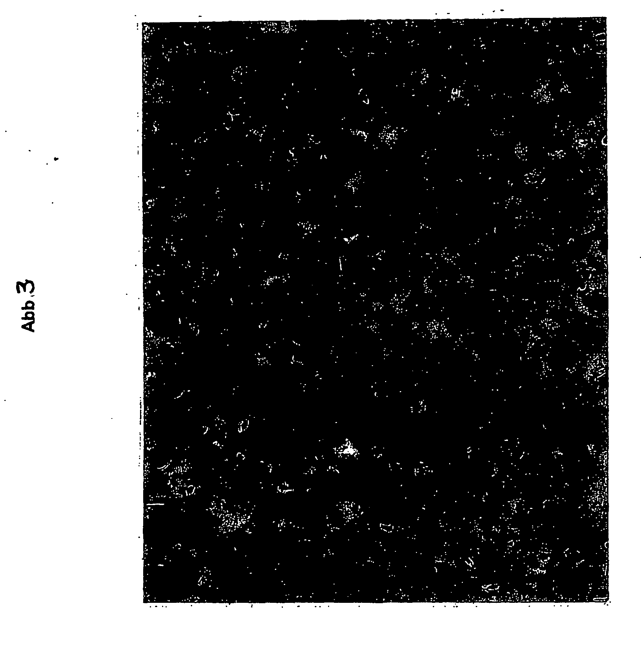

Abbildung 3 zeigt die vergrößerte Oberflächenaufsicht eines Formschaumteils mit Ansätzen zur Hautbildung, die durch den Einsatz von Trennmitteln hervorgerufen werden.

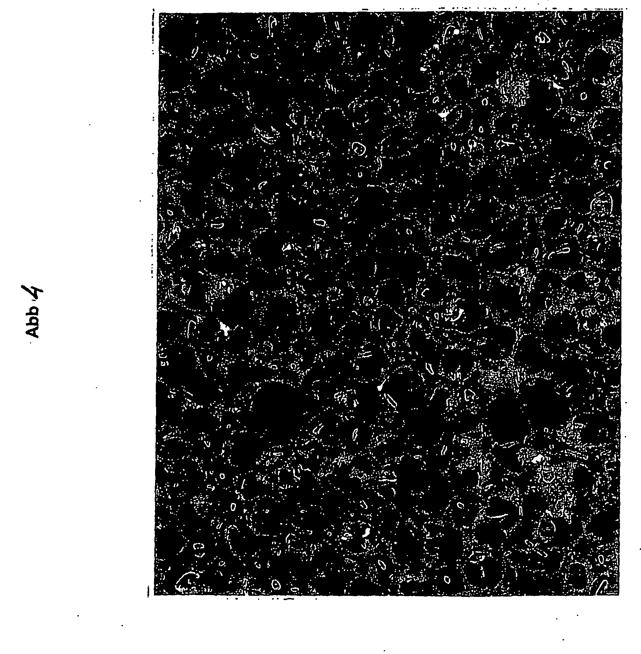

Abbildung 4 gibt die vergrößerte Oberflächenaufsicht eines Formschaumteils mit offener Schaumoberfläche aus einer erfindungsgemäß ausgestatteten Kavität ohne Hautbildung.

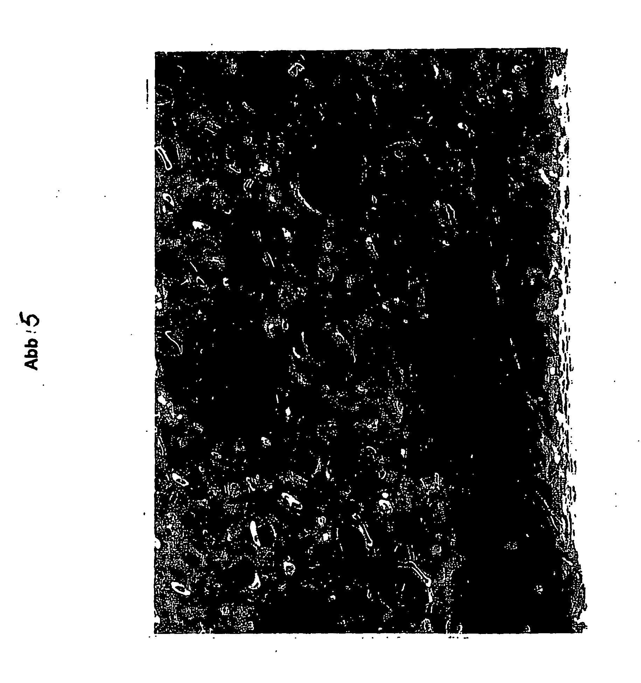

Abbildung 5 stellt die vergrößerte Ansicht eines Schnitts durch den Oberflächenbereich eines Formschaumteils mit deutlichen Verzerrungen in der Blasenstruktur und Artefakten, hervorgerufen durch Fließscherkräfte.

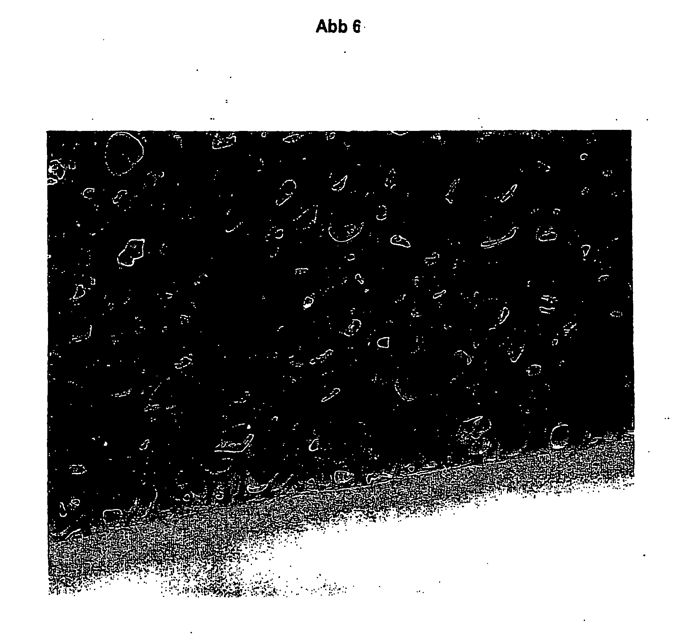

Die Abbildung 6 gibt die vergrößerte Ansicht eines Schnitts durch den Oberflächenbereich eines Formschaumteils aus einer erfindungsgemäß ausgestatteten Kavität ohne Verzerrungen in der Blasenstruktur wieder.

## Patentansprüche

1. Formwerkzeug zur Herstellung von Polyurethan-Formschaumkörpern aus einer expandierbaren Reaktivmischung in einem Werkzeug, **dadurch gekennzeichnet, dass** die formgebenden Innenflächen des Werkzeugs mit einer Mikrostrukturierung nach dem Lotusblatt-Effekt ausgestattet sind.

2. Formwerkzeug nach Anspruch 1 **dadurch gekennzeichnet, dass** die formgebenden Innenflächen auch mit einer dauerhaften Antihaftbeschichtung aus einem Fluorkunststoff oder einem Diamond-Like-Coating ausgestattet sind.

## Claims

1. A forming tool for producing molded polyurethane foam bodies made of an expandable reactive mixture in a tool, **characterized in that** the shaping inner surfaces of the tool are provided with a microstructuring according to the lotus leaf effect.

2. The forming tool according to claim 1, **characterized in that** the shaping inner surfaces are provided in addition with a durable nonstick coating made of a fluoroplastic or of a diamond-like coating.

## Revendications

1. Outil de formage pour la réalisation de corps moulés en mousse de polyuréthanne dans un moule, à partir d'un mélange réactif expansible, **caractérisé en ce que** les faces intérieures du moule, lesquelles confèrent la forme, sont munies d'une microstructuration selon l'effet lotus.

2. Outil de formage selon la revendication 1,
**caractérisé en ce que** les faces intérieures conférant la forme sont revêtues d'un revêtement anti-adhérent permanent en matière synthétique fluorée ou d'un revêtement à effet diamant (diamond like coating).
